# EUROPEAN PATENT APPLICATION

(11) **EP 1 167 239 A1**
(43) Date of publication of application: **02.01.2002**
(21) Application number: 01202028.5
(22) Date of filing: 29.05.2001
(51) Int. Cl.: B65F 1/00, B30B 9/30

(54) **Recyclable waste collection apparatus**

(30) Priority: 01.06.2000 IT MI001222
(71) Applicant: Icotronic S.p.A., 84025 Avellino (IT)
(72) Inventor: Serriello, Gabriele, 00189 Roma (IT)
(74) Representative: Ferroni, Filippo

(57) **Abstract**

The invention relates to an apparatus (1) for collecting recyclable waste, such as glass, paper, cans and the like, also known as "ecological island", which automatically sorts the waste into respective containers (4,5,6,7) arranged in parallel rows.

More specifically, the waste is brought by a user into one of the compartments (21,23) provided on a bridge (20) transverse to the rows of containers and movable back and forth thereabove; the bridge is then positioned above the container corresponding to the collected waste, which is then allowed to fall from above into the container itself.

The apparatus is also suitable for containers of standard type already used nowadays.

## Description

The present invention relates to apparatus where urban and in particular, domestic waste such as paper, glass, cans or others, is brought for selective collection thereof.

These apparatus are also commonly referred to as "ecological islands" and are in practice small collection centres alternative to the normal urban litter bins, where the citizen can bring from home the collected materials which are then automatically sorted by the apparatus into respective containers.

For example, a type of ecological island known nowadays comprises a series of containers arranged on a table rotating around a vertical axis which, by rotating in a predetermined manner, brings in each case a container to the point where the waste is thrown.

More particularly, said waste is loaded by the user in an area of the apparatus which is accessible by means of a door, likewise a small cabinet; thereafter, by selecting the loaded material (glass, plastics, paper etc.) on control buttons, the table rotates in such a way as to bring the container intended for collection of that material, into the loading zone.

Here, the collected waste is made to fall automatically from above into the container below; in order to improve the efficiency of the system, the material is compacted inside the receptacle with a piston which acts vertically.

Known collection apparatus are also provided with a weighing system allowing the quantity of waste collected to be measured and which issues a ticket, similar to a receipt, with the data relating to each loading/unloading operation.

Consequently, in order to manage the collection service each user is supplied with a card, similar to a telephone or bank card, on which the abovementioned data are recorded and which is inserted into the apparatus at the start of each operation.

The ecological islands considered above are capable of performing their functions correctly; however, they have some drawbacks due to the practical environment wherein the urban waste collection service is normally performed.

In the first place it should be pointed out that the particular configuration with rotating table requires containers purposely designed in order to function well and occupy a limited space; in other words, said configuration is not suitable for waste containers normally used in urban areas (rubbish skips, bins and the like), which all have standard dimensions prescribed by special technical regulations.

But above all it should be pointed out that compaction of glass, plastics or aluminium cans carried out after having thrown them inside the respective container, does not appear to be easy to perform.

Indeed, it is sufficient to consider that the filling level of the containers varies over time (for example at the start of a regular maintenance cycle it will be empty and will then grow gradually as material is added) and therefore also the operating conditions in which compaction must be performed will change over time; this could diminish the efficiency of this operation or in any case provide irregular effects thereof.

On the other hand, in order to exert an adequate pressure when compacting the material thrown in the containers, it is necessary that the latter be sufficiently strong (and therefore heavy) as well as the table where they are placed, which must also be suitably reinforced: this therefore makes the ecological islands manufactured in accordance with this design fairly complex and therefore not very suitable for the practical requirements of normal urban waste collection services.

Of course there are also other types of ecological islands for the selective collection of glass, plastics, paper etc., which are different from those described above.

For example, widespread apparatus are known wherein the storage containers, which may be bins or other type of container, are arranged on three sides of a central column-like structure with a quadrilateral base, whose free side is used instead for bringing of the waste by the user.

It is clear that such apparatus do not allow the simultaneous application of more than three containers (and therefore would not be sufficient when the collection of, for example, glass, paper, cans and plastics is required).

Furthermore, for the functioning of these apparatus the material initially introduced by the user into a weighing chamber is displaced into another chamber for compaction and then thrown into the final storage container; for this purpose, movement systems which do not seem particularly reliable are therefore necessary.

It should be taken into account that ecological islands operate under quite hard conditions and therefore the need of several movements of the material from one chamber to another and the systems required thereto could diminish their functional reliability.

In the light of the foregoing, it is therefore the object of the present invention to provide an ecological island suitable for remedying the drawbacks of the state of the art.

That is to say that it aims at providing an apparatus for recyclable-waste collection, which has small dimensions (obviously having regard to the capacity of the containers used) and in which the various operative stages during functioning, as described above, are carried out in a simple and reliable manner.

This object is achieved by an apparatus, whose characteristing features are set out in the claims appended to this description.

Such features and the advantages arising therefrom will emerge more clearly from a preferred and non-exclusive embodiment of the invention, which is explained hereinbelow with reference to the attached drawings in which:

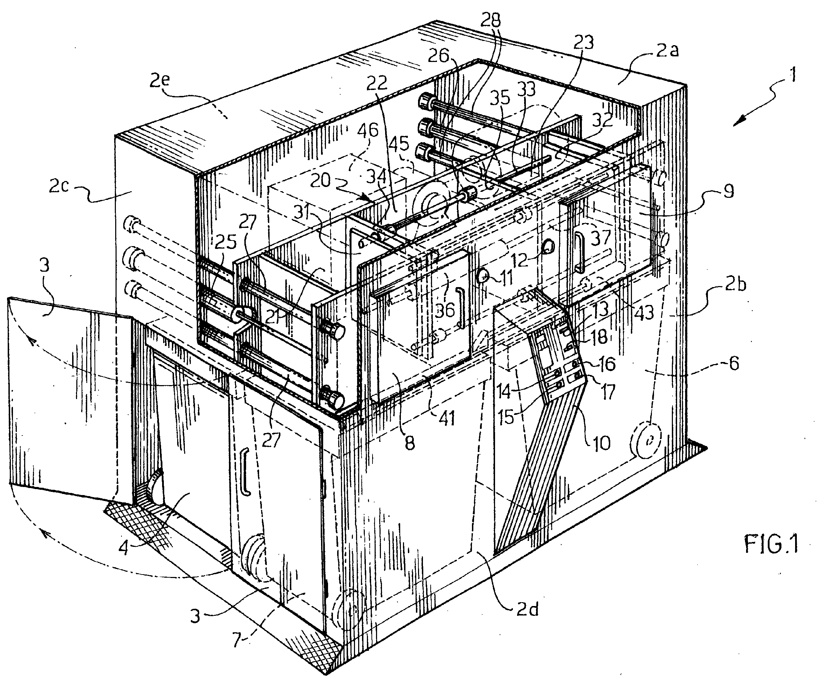

- Fig. 1 is a perspective view of an apparatus for the recyclable waste collection, in accordance with the teachings of the present invention;

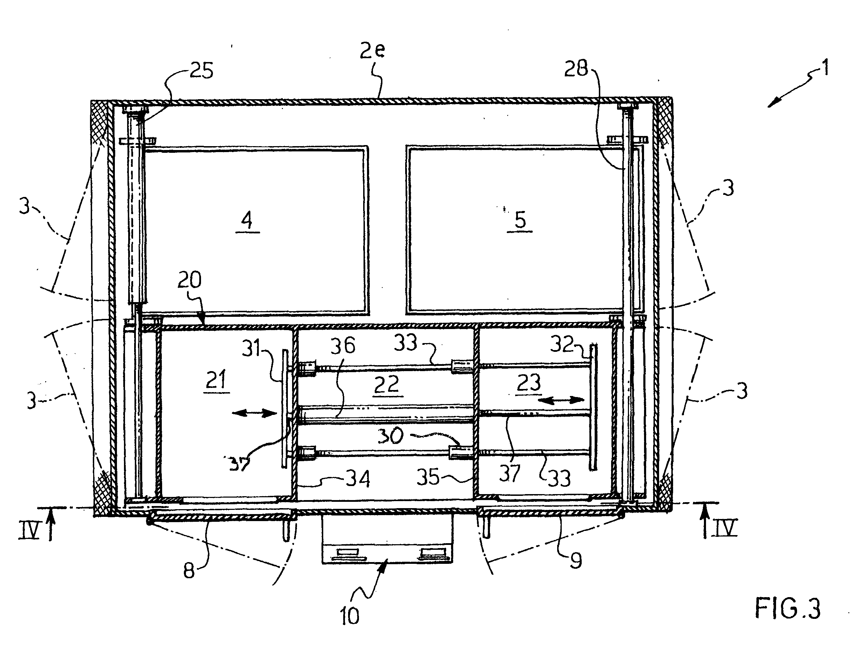

- Figures 2 and 3 are, respectively, a front view and a plan view of the apparatus shown in Fig. 1;
- Figure 4 shows a cross-sectional view of the abovementioned apparatus, taken along the line IV-IV of Fig. 3;
- Figure 5 shows a side view, with a cutaway part, of the abovementioned apparatus.

With reference to these drawings, the embodiment of apparatus or ecological island according to this invention, is generally indicated therein by 1.

Said apparatus is delimited externally by a casing 2, with a parallelepiped shape, which is formed by a panelled structure of metal or other appropriate material; the structure can have various dimensions according to the circumstances and in the example considered here measures approximately 2 metres both in height and width, and is 1.5 metres deep.

Advantageously, the upper side 2a of the external casing 2 can be raised in a manner similar to a lid, so as to allow access from above to the apparatus for maintenance operations.

As can be seen in the drawings, the casing 2 has, on two lateral sides 2b, 2c, openings closed by doors 3 which allow the movement of four containers 4, 5, 6 and 7 housed therein, each of said container being intended for the storage of a respective type of waste (for example paper, plastics, cans and glass). In practice, these doors have the purpose of allowing the containers 4-7 to be extracted from the apparatus when, during the collection service, they need to be emptied because they are full.

On the front wall 2d of the casing there are provided two shutters 8 and 9 which are intended for the input of waste in the apparatus by the users, and a control panel 10, serving as operational interface between the apparatus and the users.

The shutters 8 and 9 may preferably be opened in a controlled manner by means of an electronic control system, in such a way as to allow access the through only when opening is enabled by the apparatus; for this purpose, close to each of said shutters there is a respective indicator lamp 11, 12 signaling to the user the moment when it is possible to open it.

A slot 13 for the introduction of a card, similar to those already used in known ecological islands, is provided on the control panel 10, as well as a number of buttons 14, 15, 16, 17 (one for each type of waste for which the apparatus is intended) to be pressed by the user when he/she wants the final receipt with the data of the collecting operation performed.

For this purpose the control panel 10 is connected to an electronic control unit of the apparatus which will be explained more clearly hereinafter, capable of processing all the information envisaged for the collection service desired and printing the abovementioned receipt, which is issued from the control panel 10 through an opening 18.

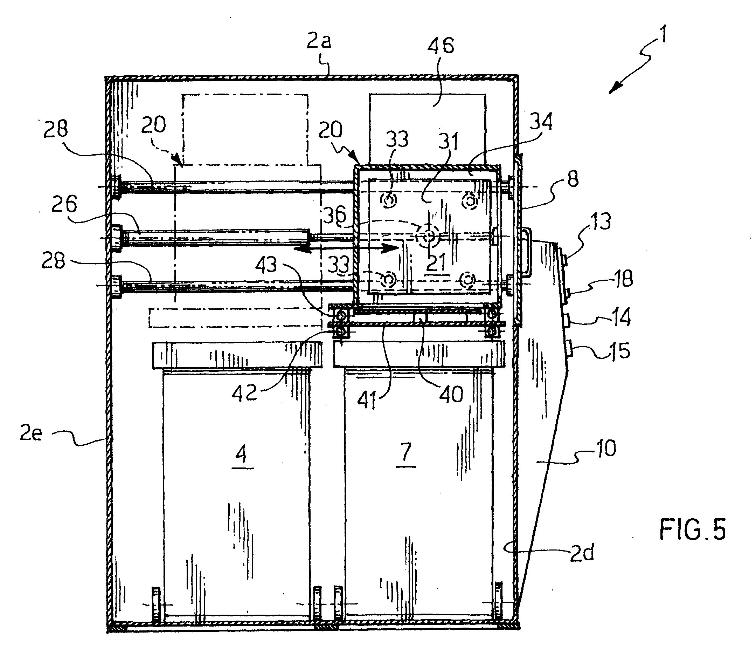

Inside the outer casing 2 of the apparatus and in a position above the containers 4-7 there is a bridge 20 which moves back and forth between the front wall 2d of the casing and the rear wall 2e (as shown by the arrow in Fig. 5).

Said bridge 20 is basically a parallelepiped open at the front, i.e. on the side facing the front wall 2d of the casing 2, and is divided up internally into three compartments 21, 22 and 23; the two compartments 21 and 23 are also open below, where there is a respective movable bottom 24.

The bridge 20 is operated hydraulically by two cylinders 25, 26 arranged on its ends and is slidable along two pairs of guides 27, 28, parallel to said hydraulic cylinders.

Furthermore, a compacting frame 30 formed by two plates 31, 32 fixed to the ends of four rods 33 which pass through the dividing walls 34, 35 of the compartments 21, 22, 23, is installed on the bridge 20; the frame 30 moves under the effect of a hydraulic cylinder 36, the rod 37 thereof acting on the plates 31, 32.

Following the displacements of the frame, said plates are capable of compressing the material located inside the compartments 21 and 23, as will be seen more clearly hereinafter. Returning now briefly to the movable bottoms 24 of the compartments 21 and 23, in this example of the invention a respective load sensor 40 is provided under each of them; this sensor is in turn supported by a tray 41 moved in a plane by a hydraulic system similar to those already seen above, i.e. formed by a cylinder 42 and sliding guides 43 parallel thereto.

As can be understood from the above description, in the apparatus 1 of this example there are three hydraulic systems for performing respective functions, i.e. displacement of the bridge 20, actuation of the compacting frame 30 and movement of the bottoms 24.

For operation of these systems, the apparatus 1 is provided internally with a hydraulic unit comprising a supply pump 45, a tank 46 upstream of the pump, as well as a series of pipes and solenoid valves known per se (and therefore not shown in the drawings) for conveying the operating fluid to the cylinders 25, 26, 36 and 42.

According to a preferred embodiment of the apparatus, the pump 45, the tank 46 and the other parts of the hydraulic unit are mounted on the bridge 20, so as to limit significantly the deformations of the flexible pipes caused by the relative movements of the parts of the apparatus.

Indeed, in this way both the cylinder 36 which actuates the compacting frame 30 and the cylinders 42 which move the tray 41, are integral with the aforementioned pump and tank since they are also mounted on the bridge 20; consequently there is no relative movement between them, thereby simplifying the design.

However, as regards supplying of the cylinders 25 and 26 which move the bridge, and are fixed with respect thereto being mounted on the outer casing 2, it can be said that given the interposed position of the hydraulic unit located on the bridge, the supply difficulties due to the movement of the latter are rather limited.

Likewise the pump 45 and the tank 46 just described, the electronic control unit of the apparatus which was mentioned earlier in relation to the control panel 10, is located on the bridge 20 for the same reasons concerning the hydraulic unit.

Said unit comprises electronic means of the type known per se, which are operatively connected to the various members of the apparatus such as the solenoid valves for the fluid circulating in the hydraulic system, the pump 45, the sensors which detect the position of the moving parts, etc.; the electronic control unit is also suitable for remote transmission of the data concerning the storage operations performed by the apparatus, for example to a remote centre for management of the waste collection service.

To this purpose, reference could be made to a city organisation which performs such a service and which must ensure emptying of the containers, for the ecological islands located in various parts of the city; with the information transmitted by the control unit of each apparatus it is possible to perform punctual and precise maintenance at a low cost.

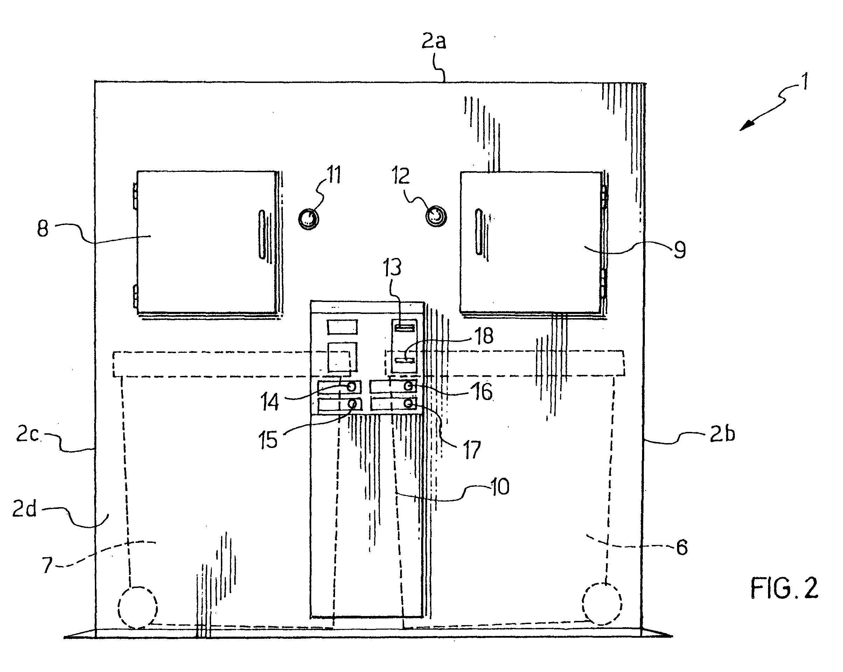

When a user needs to bring waste, the apparatus is in the state shown in Fig. 2, i.e. with the shutters 8, 9 closed and the bridge 20 in the forward position as shown in Fig. 5.

In this initial condition the user introduces the card into the slot 11 and presses one of the pushbuttons 14-17 on the panel 10, to select the type of waste brought.

At this point opening of the shutter 8 or 9 is enabled on the side where (with reference to Fig. 2) the container 4-7 for storage of the type of waste selected is located; this enabling is signalled by one of the two indicator lamps 11 or 12.

In the explanation of the functioning of the apparatus, for the sake of brevity reference will be made hereinafter only to the left-hand shutter 8, to the compartment 21 and to containers 4, 7, all located on the side of said shutter; however, it is nonetheless understood that the explanation given is also applicable conversely to the shutter 9, compartment 23 and containers 5, 6.

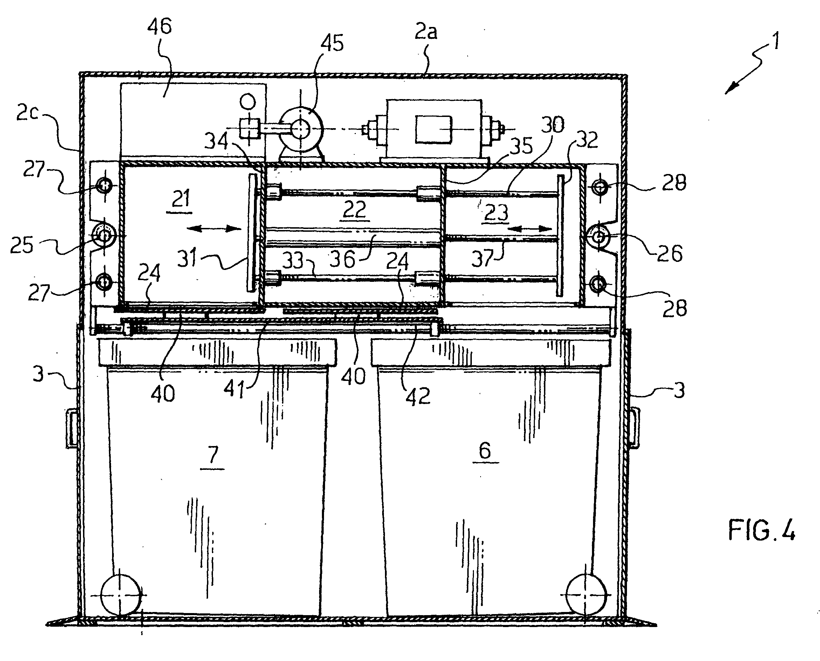

The user therefore opens the shutter 8 and introduces the waste into the compartment 21 behind; for this purpose it should be pointed out that in the abovementioned initial condition, said compartment is closed below by the bottom 24 as shown in Fig. 4.

After the shutter 8 has been closed again, the apparatus proceeds with weighing of the material deposited.

This operation is carried out by the load sensor 40, which has the function of weighing the material placed on the bottom 24 of the compartment 21; the load sensor then transmits the weight measurement performed to the central control unit.

The apparatus then proceeds to check the position of the bridge 20 with respect to the containers 4 and 7; more specifically, this step has the purpose of checking whether the compartment, into which the waste has been introduced and which is now still in the advanced position as shown in Figure 5, is above the correct container 4 or 7 or not, i.e. the container intended for the waste just weighed.

If the check is positive, the bridge 20 remains stationary; otherwise the bridge is moved by the cylinders 25, 26 so as to bring it into the backward position (shown with a broken line in Fig. 5).

At this point compaction of the waste begins; for this purpose the compacting frame 30 is pushed towards the left by the hydraulic cylinder 36 starting from the condition shown in Fig. 4, in such a way that the plate 31 compresses the material present in the compartment 21 against the opposite wall thereof.

Once the frame 30 has completed the compaction stage, it is brought back into the above initial position; the material located in the compartment 21 can now be made to fall into the relevant container 4 or 7 by causing the bottom 24 to move to the right with reference to Fig. 4.

This is achieved by moving the tray 41 on which the abovementioned bottom is mounted, in such a way as to bring said base into a position underneath the compartment 22 of the bridge 20, which is located alongside.

In this manner, as the bottom 24 is gradually extracted from underneath the compartment 21, the material placed thereon falls into the container 4 or 7 below; it can be noted how, during this step, the dividing wall 34 of the compartment 21 performs a cleaning action on the surface of the bottom 24, which is in fact scraped by the edge of said wall. This action can also be improved by applying a rubber seal or other equivalent element on such an edge.

Once deposition of the waste in the respective container has been completed, the apparatus 1 issues a receipt containing the data relating to the operation performed; the data shown on said receipt will essentially depend on the management procedures of the selective collection service.

It should be pointed out that in addition, or also alternatively, to the abovementioned receipt, the data can also be recorded on the card inserted by the user into the slot 13.

From what has been explained heretofore it is possible to understand how the apparatus of the present invention achieves the object set out initially.

First of all it should be pointed out that normal containers of standard type can be used with the apparatus; for example, in the case described above the containers 4, 5, 6 and 7 are normal 360-litre containers, which have their tip-up lid removed.

However, it is clear that containers of other capacities can also be used; in these circumstances it will just be needed to design apparatus with suitable dimensions for such containers.

Secondly it should be pointed out that in the apparatus according to this invention, any number of containers can be used (i.e. more than the four ones shown in the preceding example), with plan dimensions which corresponds substantially to that of the containers present inside it.

This important result is achieved thanks to the particular system of compacting and sorting the material into the various containers, wherein these operations are carried out above said containers and the waste then falls from above into the various containers.

In this context it should be noted that in known apparatus with rotating table mentioned initially, it is the containers which are moved by the rotations of the table towards the point at which the waste falls from above into them.

This requires containers of a particular shape so that they can be arranged close together on the rotating table, thereby restricting the space occupied.

In contrast, in the present invention the containers are stationary and arranged in parallel rows, thereby providing dimensions reduced to the minimum (despite being of the standard type, i.e. not special containers); in this respect it should be pointed out that the number of containers present in each of the side-by-side rows may be greater than two, therefore different from what has been shown in the drawings.

In other words, in the apparatus according to the invention the containers are arranged in two parallel rows in the direction of displacement of the bridge 20 (i.e. the direction determined by the cylinders 25, 26), and the number of containers present along said rows can be 3, 4 or more.

However, the plan-view dimensions of the apparatus will depend only on the number of containers used and operation of the apparatus will take place according to the same procedures explained above, while the travel of the bridge 20 will (obviously) be longer, so as to allow it to be positioned above all the containers arranged in the rows.

From what has been described above, it can also be said that the bridge 20 moves in fact like the beam of a bridge crane.

It should also be considered that in the apparatus according to the invention the compaction of the waste is performed in the compartments 21 and 23, i.e. not by compressing the material in the storage containers 4-7 but rather operating in special compartments. Consequently, the conditions in which the compression of the material occurs are always the same, given that they do not depend on the filling level of the storage containers, as instead occurs in the prior art.

Moreover, it should be added that in the embodiment of the invention described above, the same compartments in which the compaction is performed are also used for weighing the material, thereby providing them with a dual function which contributes to a more rational use of space and resources.

For this purpose it should be appreciated that the compacting frame 30 moves in a horizontal direction in such a way that during the compression of the material, it does not exert forces against the movable bottom 24 and the load sensor 40, with the risk of damaging them.

In other terms, the only stress exerted on the bottom 24 is that resulting from the material which, when it is compressed by the plate of the compactor, tends to escape downwards applying a force of nevertheless limited degree on said bottom.

Naturally variations of the apparatus are possible with respect to the example shown in the drawings.

It has already been said earlier that the number and the dimensions of the storage containers 4-7 can differ from those considered; but solutions different from those proposed above might also be envisaged for other features.

For example, the plates 31 and 32 of the frame 30 or the inner walls of the compartments 21, 23, which have been shown flat in the drawings, could instead be shaped differently; in particular, in order to assist the breaking-up of the various materials (for example glass bottles) said surfaces could be provided with pointed ribs or projections.

Likewise, the actuating systems for the various movable parts which in the case considered here are of the hydraulic type with cylinders 25, 26, 36 and 42, can instead be electromechanical or of other type.

For example, it would be possible to consider obtaining the displacements of the bridge 20 with a rack mechanism or with an actuating screw in the place of the cylinders 25, 26; similar solutions could also be applied to the compacting frame 30 and to the tray 41.

Last, it would also be possible to consider the possibility of designing a bridge with a single compartment (instead of the two compartments present in the example described) being however movable along said bridge, so as to be positioned above the required container in each case for unloading the waste.

Although this variation increases the complexity of the apparatus since it requires the addition of an extra movement system (in addition to the three systems already mentioned above) with associated control of the position of the single compartment, it should nevertheless not be ruled out.

All these and other possible variations nonetheless fall within the scope of the following claims.

## Claims

1. Waste collection apparatus, comprising a plurality of containers (4, 5, 6, 7) wherein waste is sorted depending on the respective material, **characterized in that** said containers are arranged side-by-side in parallel rows and **in that** it comprises a bridge (20) transverse with respect to said rows and movable back and forth above the containers in order to transport the waste brought to the apparatus, means (25, 26, 27, 28) for positioning the bridge above a predetermined container and means (21, 23, 24, 30, 41) for unloading the waste into said container.

2. Apparatus according to Claim 1, comprising means (30, 31, 32, 33, 36) for compacting the waste transported with the bridge (20).

3. Apparatus according to Claim 2, wherein the movable bridge (20) is provided with at least one compartment (21, 23) with a substantially parallelepiped shape, into which the waste deposited in the apparatus is placed and which is open below where there is a bottom (24) movable transversely with respect thereto.

4. Apparatus according to Claim 3, wherein the means for compacting the waste comprises a frame (30), with a thrust surface (31) provided in said at least one compartment (21, 23), slidable back and forth along the bridge (20) so as to move the thrusting surface in a direction transverse to that of said compartment.

5. Apparatus according to Claim 4, wherein a second compartment (23), substantially similar to the first one and open below where there is a movable bottom (24), is provided on the bridge (20), and wherein the compacting frame (30) comprises a second thrusting surface (32) at the opposite end to the first surface, which is moved inside the second compartment in a direction transverse thereto following the sliding movements of the frame along the bridge.

6. Apparatus according to Claim 5, wherein said thrusting surfaces (31, 32) and/or the inner walls of the compartments (21, 31) are provided with ribs, projections or the like, in order to assist the compaction of the waste.

7. Apparatus according to Claim 6, wherein the movable bottom (24) of said at least one compartment (21) rests on weight measuring means (40), thereby allowing weighing of the material contained in the compartment.

8. Apparatus according to Claim 7, wherein the weight measuring means comprises a load sensor (40).

9. Apparatus according to any of the preceding claims, wherein the waste containers (4-7) are of a standard type.
